# EUROPEAN PATENT APPLICATION

(11) **EP 1 134 578 A1**
(43) Date of publication of application: **19.09.2001**
(21) Application number: 99972735.7
(22) Date of filing: 15.11.1999
(51) Int. Cl.: G01N 21/49

(54) **INSTRUMENT FOR MEASURING LIGHT SCATTERING**

(30) Priority: 24.11.1998 JP 33313098
(71) Applicant: OTSUKA ELECTRONICS CO., LTD., Hirakata-shi Osaka 573-1132 (JP)
(72) Inventor: AKAGI, Motonobu, Minakuchi-cho, Koka-gun Shiga 528-0074 (JP); TSUTSUI, Kazunori, Hirakata-shi, Osaka 573-1113 (JP); MIZUGUCHI, Tsutomu, Rittou-cho, Kurita-gun, Shiga 520-3034 (JP); SEKIWA, Mitsunao, Hirakata-shi, Osaka 573-1106 (JP)
(74) Representative: HOFFMANN - EITLE
(86) International application number: JP9906376
(87) International publication number: WO0031514

(57) **Abstract**

An instrument for measuring light scattering of the present invention includes an incident optical fiber 4 for irradiating light to a sample and a scattered light measuring optical fiber 6 for collecting scattered light to be propagated, and the claddings 24 and 28 of the respective optical fibers 4 and 6 are opposed to each other directly at a predetermined angle of 90° within a sample cell (Fig. 1). This configuration provides a simple and highly reliable instrument for measuring light scattering.

## Description

### TECHNICAL FIELD

The present invention relates to an instrument for measuring light scattering that performs light scattering measurement by irradiating light to a sample and detecting scattered light from inside a scattering volume.

### BACKGROUND ART

An instrument for measuring light scattering is defined as an instrument that measures a change of scattering light over time caused by motion (Brownian motion) of particles present in a fluid.

A conventional instrument for measuring light scattering performs measurement by irradiating a beam of laser focused to a desired aperture by a lens to a cell of rectangular parallelepiped filled with a sample fluid, limiting a scattering volume by a pin hole system given with an angle of 90°, and measuring the scattered light by a light receiving element, such as a photo multiplier.

The above instrument for measuring light scattering has a long optical path in the cell, and for this reason, using a concentrated solution as a sample causes multiple scattering of incident light and scattered light, thereby making it impossible to obtain data in time sequence accurately.

In order to solve the above inconvenience, as is disclosed in PCT Unexamined Patent Publication No. 2-502482 (WO88/07179), for example, an instrument for measuring light scattering is proposed, in which an incident single mode optical fiber and a light-receiving single mode optical fiber are opposed to each other at their respective end surfaces at a predetermined angle in close proximity within a cell.

The above instrument for measuring light scattering, however, is provided with a microscopic lens at the end surface of the single mode optical fiber, so that light incident at angles other than the predetermined angle is cut.

Hence, the above instrument can attain satisfactory measuring efficiency and cut noises caused by light incident at unwanted angles. However, the above instrument demands an arrangement to provide the microscopic lens at the end surface of the single mode optical fiber, which complicates the arrangement of the single mode optical fiber and causes the cost to increase.

### SUMMARY OF THE INVENTION

It is therefore an object of the present invention to achieve an instrument for measuring light scattering, which is arranged in such a manner that single mode optical fibers are opposed to each other at a predetermined angle in close proximity and capable of measuring intensity of scattered light with a simpler and highly reliable configuration.

An instrument for measuring light scattering of the present invention includes an incident single mode optical fiber for irradiating light to a sample, and a scattered light measuring single mode optical fiber for collecting scattered light to be propagated, wherein an end surface of an exposed cladding of each of the single mode optical fibers is opposed to each other at a predetermined angle within a sample cell (Claim 1).

In this case, the instrument is characterized in that the end surface of the exposed cladding of each of the single mode optical fibers is opposed to each other directly without interposing any light collecting system, such as a lens, in between. According to this configuration, light scatted from inside the scattering volume reaches directly and propagates through the scattered light measuring single mode optical fiber. Although light incidence efficiency is reduced compared with a case where the light collecting system is interposed, it is possible to obtain measuring light having satisfactory intensity and coherence for practical use if the sample itself has high scattering efficiency.

In addition, because the end surfaces of the claddings of the incident optical fiber and scattered light measuring optical fiber are opposed to each other directly without interposing any light collecting system, such as a lens, in between, the configuration inside the sample cell can be simpler, which makes it possible to achieve an inexpensive and highly reliable instrument.

It is preferable that a distance between the end surfaces of the claddings of the fibers is selected in a range from approximately one to several times as long as a diameter of the cladding (Claim 2). This is because measuring light having better intensity and coherence can be obtained by placing the end surfaces of the claddings of both the fibers in close proximity within the above range.

Also, if an incidence coupling portion used in guiding light emitted from an incident light source to reach the incident signal mode optical fiber is allowed to move back and forth along an optical axis direction (Claim 3), incident light can be regulated not in a step-wise manner but continuously in comparison with the conventional darkening method that places ND filters on an optical path (conventionally, only step-wise regulation corresponding to a total number of the placed ND filters is available).

An instrument for measuring light scattering of the present invention includes an incident single mode optical fiber for irradiating light to a sample, and a scattered light measuring single mode optical fiber for collecting scattered light to be propagated, and is characterized in that a cladding of one of the single mode optical fibers is exposed, and an end surface of the exposed cladding of one of the single mode optical fibers is opposed to an end surface of the other optical fiber at a predetermined angle within a sample cell (Claim 4).

According to the above configuration, because the cladding of one of the optical fibers is exposed, light scatted from inside the scattering volume reaches directly and propagates through the scattered light measuring single mode optical fiber. Although light incidence efficiency is reduced compared with a case where the light collecting system is interposed in between, it is possible to obtain measuring light having satisfactory intensity and coherence for practical use if the sample itself has high scattering efficiency.

In addition, it is preferable that a distance from the end surface of the exposed cladding of one of the optical fibers and the end surface of the other optical fiber is selected in a range from approximately one to several times as long as a diameter of the cladding (Claim 5). This is because measuring light having better intensity and coherence can be obtained by placing the end surface of the exposed cladding in close proximity with the end surface of the other fiber within the above range.

Also, if an incidence coupling portion used in guiding light emitted from an incident light source to reach the incident signal mode optical fiber is allowed to move back and forth along an optical axis direction (Claim 6), incident light can be regulated not in a step-wise manner but continuously in comparison with the conventional darkening method that places ND filters on an optical path.

It is preferable to provide light collecting means for collecting light to the other optical fiber having an unexposed cladding (Claim 7).

Providing the light collecting means can improve light incidence efficiency compared with an arrangement having no light collecting system, and therefore, even if the sample itself has low scattering efficiency, it is possible to obtain measuring light having satisfactory intensity and coherence for practical use.

Examples of the light collecting means include: a prism and a lens (Claim 8); an arrangement such that the end surface of the other optical fiber is cut diagonally and a reflection film is formed thereon (Claim 9); and an arrangement such that a member having a higher refractive index than the sample is placed at the end surface of the other optical fiber (Claim 10).

When the member having a higher refractive index than the sample is placed, it is preferable to apply lens polishing treatment to the member (Claim 11).

### BRIEF DESCRIPTION OF THE ACCOMPANYING DRAWINGS

Fig. 1 is a view depicting an entire configuration of an instrument for measuring light scattering of the present invention;
Fig. 2 is an enlarged view showing a light scattering portion within a cell;
Fig. 3 is a perspective view showing an arrangement to hold an incident optical fiber 4 and a scattered light measuring optical fiber 6 within a cell 5 so as to oppose each other;
Fig. 4 is a view showing a concrete configuration of an incident light intensity regulator 3;
Figs. 5A through 5C are views showing arrangement where a cladding 24 of the incident optical fiber 4 and a cladding 28 of the scattered light measuring optical fiber 6 are brought into physical contact with each other at their respective corners;
Fig. 6A is an enlarged view depicting a light scattering portion when the cladding of one of the optical fibers is exposed;
Fig. 6B is a view showing a placement where the cladding 28 of the scattered light measuring optical fiber 6 is exposed instead of that of the incident optical fiber 4 and brought into physical contact with the tip end surface of the incident optical fiber 4;
Fig. 6C is a view showing an arrangement when the cladding 24 of the incident optical fiber 4 is exposed and placed apart from the tip end surface of the scattered light measuring optical fiber 6;
Fig. 6D is a view showing a state where the cladding 28 of the scattered light measuring optical fiber 6 is exposed instead of that of the incident optical fiber 4 and placed apart from the tip end surface of the incident optical fiber 4;
Fig. 7 is a view depicting an arrangement such that the cladding 24 of the incident optical fiber 4 is exposed, and a prism 10 for refracting scattered light and a light collecting lens 11 are provided to the scattered light measuring optical fiber 6;
Fig. 8 is a view depicting an arrangement such that collects light by using a transparent coating portion 26 of the scattered light measuring optical fiber 6 as a cylindrical lens instead of employing the prism and lens;
Fig. 9 is a view showing a configuration such that secures a wider angle of incidence aperture by attaching a glass rod 13 at the tip end surface of the scattered light measuring optical fiber 6; and
Fig. 10 is a view showing the glass rod 13 applied with lens polishing treatment at a tip end 13a.

### BEST MODE FOR CARRYING OUT THE INVENTION

Hereinafter, a single mode optical fiber is referred to simply as an optical fiber.

### (First Embodiment)

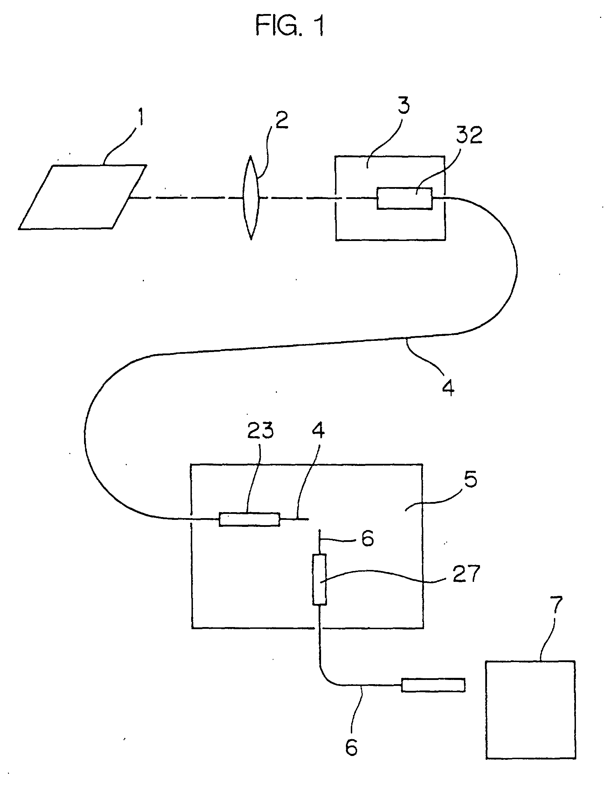

Fig. 1 is a view showing an entire configuration of an instrument for measuring light scattering. Light emitted from a laser device 1 is focused to a desired aperture by a lens 2, and goes into an incident optical fiber 4 through an incident light intensity regulator 3. The tip of the incident optical fiber 4 is inserted in a cell 5 filled with a sample, and a beam of laser is irradiated to the sample from the tip end.

Within the cell 5, a scattered light measuring optical fiber 6 is placed at a predetermined angle (for example, approximately 90°) with respect to the incident optical fiber 4. Scattered light incident on the scattered light measuring optical fiber 6 goes into a light receiving element 7, such as a photo multiplier, whereupon the light receiving element 7 measures data in time sequence. Then, an unillustrated processing circuit computes an autocorrelation function of the data to find a particle size and the like.

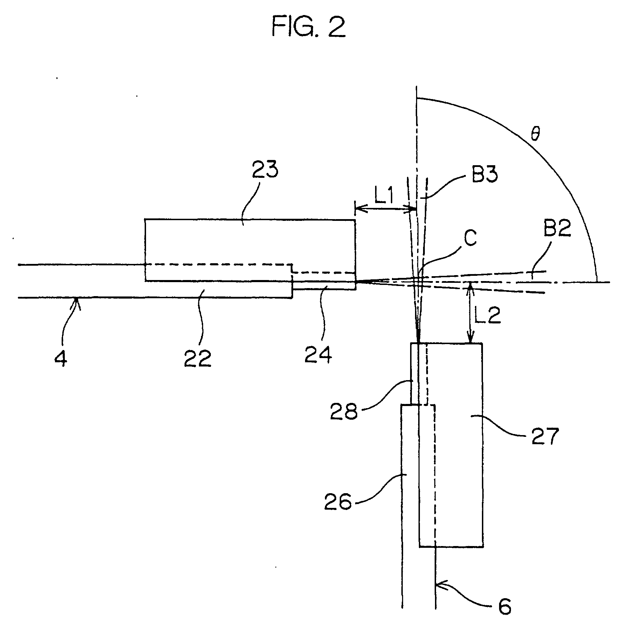

Fig. 2 is an enlarged view showing a light scattering portion within the cell 5. A cladding 24 of the incident optical fiber 4 is exposed from a coating portion 22, and light propagated through the core is irradiated into the sample from the tip end of the cladding 24. Also, a cladding 28 of the scattered light measuring optical fiber 6 is exposed from a coating portion 26, and placed so as to oppose the cladding 24 of the incident optical fiber 4. In an example shown in Fig. 2, an angle θ of opposition is set to 90°. It should be appreciated, however, that the angle θ is not limited to 90°, and can be set arbitrarily in a range from 0° to 180°. A scale (scattering vector) used in capturing the scattering phenomenon varies with measuring angles. Hence, performing scattering measurement at various angles can provide more detailed information in regard to molecular motion. However, it is general to perform the measurement only at 90°.

Accordingly, a part of light emitted from the tip end of the incident optical fiber 4 and scattered by particles in the sample is incident on the scattered light measuring optical fiber 6.

In the present invention, no light collecting means is attached at the tip end of the incident optical fiber 4 or scattered light measuring optical fiber 6. Thus, light B2 emitted from the tip end of the incident optical fiber 4 expands at a predetermined angle of aperture, and not all the scattered light is propagated in a propagation allowable mode in the scattered light measuring optical fiber 6. Nevertheless, it has been confirmed that shortening a distance between the end surfaces of the claddings makes a measuring scattering volume C substantially equal to a volume of a cylindrical column of a core diameter size, and by using a sample having satisfactory scattering efficiency (for example, particles of a sub-micron size), the intensity of light that propagates through the scattered light measuring optical fiber 6 and reaches the light receiving element 7 attains a satisfactory value for practical use, thereby making it possible to obtain data with satisfactory coherence.

The following description will give concrete values. For both the incident optical fiber 4 and scattered light measuring optical fiber 6, the diameter of the core is 4 µm; the diameter of the cladding is 125 µm; the diameter of the coating portion is 900 µm; and the numerical aperture is 0.1 (NA=0.1). Also, a distance L1 from the end surface of the cladding of the incident optical fiber 4 to the measuring scattering volume C is approximately 500 µm at most, and a distance L2 from the measuring scattering volume C to the end surface of the cladding of the scattered light measuring optical fiber 6 is approximately 500 µm at most. It should be appreciated that these numerical values are given for purpose of illustration, and the present invention is by no means limited to these numerical values.

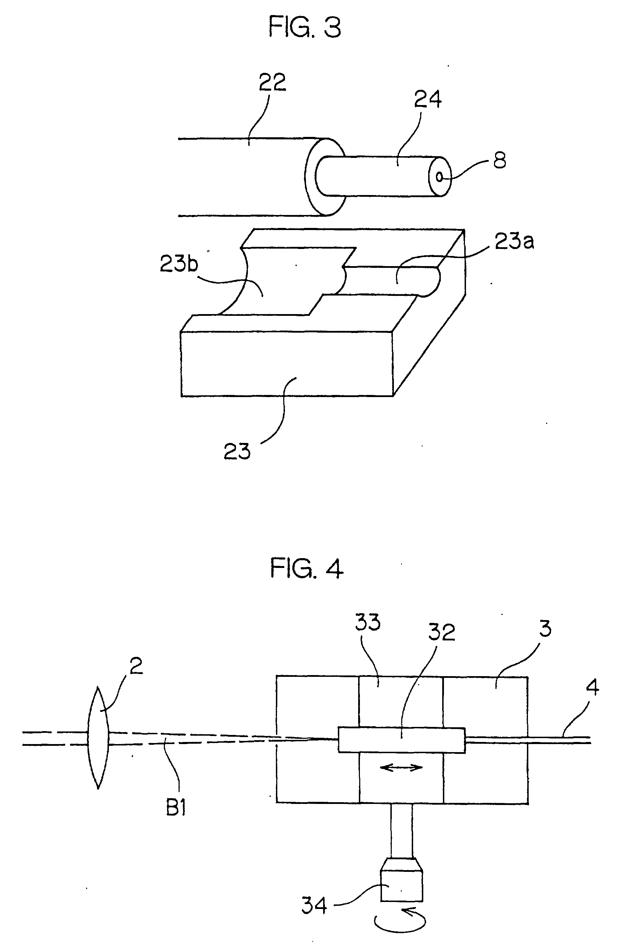

Fig. 3 is a perspective view showing an arrangement to hold the incident optical fiber 4 and scattered light measuring optical fiber 6 within the cell 5 (the drawing shows a view seen from the incident optical fiber 4 side). A holder 23 includes two grooves 23a and 23b so as to hold the tip end portion of the incident optical fiber 4 where the cladding 24 is exposed from the coating portion 22. The groove 23a and the cladding 24 are identical in size, and the groove 23b and the coating portion 22 are identical in size. The holder 23 and another holder for holding the scattered light measuring optical fiber 6 are placed exactly at their respective positions within the cell 5. Numeral 8 denotes the core.

Fig. 4 is a view depicting a concrete configuration of the incident light intensity regulator 3. Light B1 emitted from the laser device 1 and focused to a desired aperture by the lens 2 is irradiated to an incidence coupling portion 32 (enclosing the lens therein) of the incident optical fiber 4. In this case, a whole of the light B1 can be guided to reach and propagate through the incident optical fiber 4 by matching the light collecting position of the light B1 to a predetermined position (for example, the end surface) of the incidence coupling portion 32. However, if the light collecting position shifts from the predetermined position, a ratio of light propagating through the incident optical fiber 4 reduces.

In order to eliminate such an inconvenience, the incidence coupling portion 32 is allowed to move back and forth in parallel. To this end, the incidence coupling portion 32 is fixed to a movable table 33 that is allowed to move with a rotation of a knob 34. The mechanism of movement is not especially limited, and rack-and-gear mechanism can be adapted, for example.

As has been discussed, by varying a quantity of light guided to reach the incident optical fiber 4, the intensity of incident light can be adjusted not in a step-wise manner but continuously without changing a beam system or an optical axis of light in the sample.

In the first embodiment, as shown in Fig. 2, the cladding 24 of the incident optical fiber 4 and the cladding 28 of the scattered light measuring optical fiber 6 are placed in close proximity but spaced apart from each other. However, the end surfaces of these claddings can be brought into physical contact with each other.

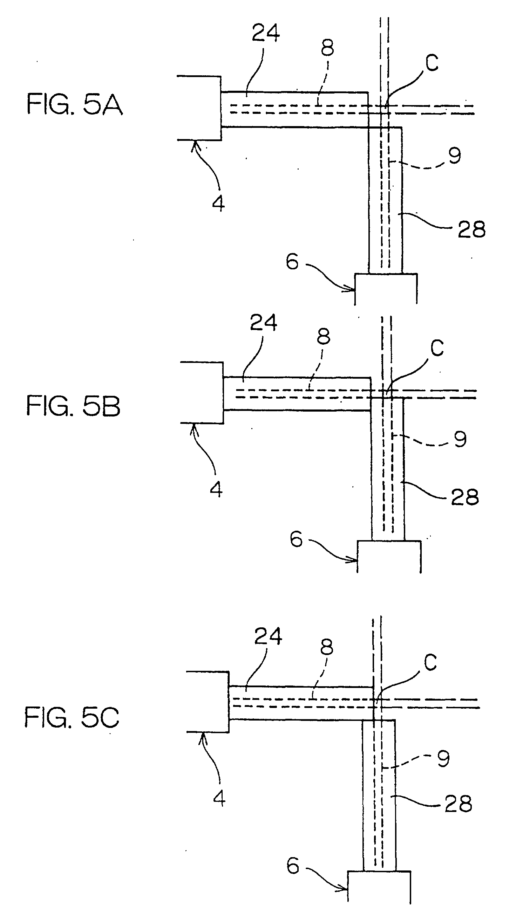

Figs. 5A through 5C are views showing arrangements when the exposed cladding 24 of the incident optical fiber 4 and the exposed cladding 28 of the scattered light measuring optical fiber 6 are brought into physical contact with each other. As shown in Fig. 5A, the corner of the claddings 24 and the corner of the cladding 28 may be placed in close proximity. Alternatively, as shown in Fig. 5B, the corner of the cladding 28 of the scattered light measuring optical fiber 6 may be placed in close proximity with the core 8 of the incident optical fiber 4, or as shown in Fig. 5C, the corner of the cladding 24 of the incident optical fiber 4 may be placed in close proximity with the core 9 of the scattered light measuring optical fiber 6.

### (Second Embodiment)

In the first embodiment discussed above, the claddings 24 and 28 of both the fibers are exposed as shown in Figs. 2 and 5.

However, it is possible to arrange in such a manner that the cladding of one of the optical fibers is exposed while the cladding of the other optical fiber is unexposed.

Fig. 6A is an enlarged view showing the light scattering portion when the cladding of one of the optical fibers is exposed. The cladding 24 of the incident optical fiber 4 is exposed from the coating portion 22, and light propagated through the core is irradiated into the sample from the tip end of the cladding 24. The tip end surface of the scattered light measuring optical fiber 6 is brought into physical contact with the cladding 24 of the incident optical fiber 4 with the cladding 28 being unexposed.

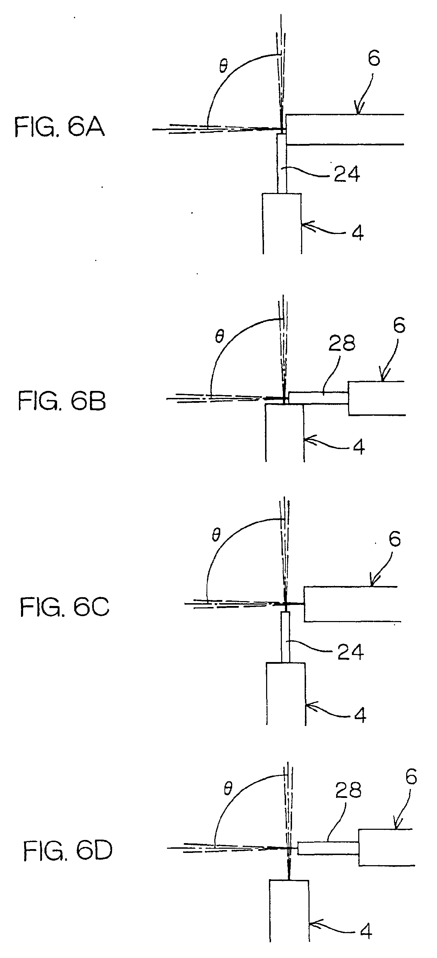

Fig. 6B is a view showing a placement where the cladding 28 of the scattered light measuring optical fiber 6 is exposed instead of that of the incident optical fiber 4 and brought into physical contact with the tip end surface of the incident optical fiber 4.

Fig. 6C is a view depicting an arrangement when the cladding 24 of the incident optical fiber 4 is exposed and placed apart from the tip end surface of the scattered light measuring optical fiber 6.

Fig. 6D is a view showing a state where the cladding 28 of the scattered light measuring optical fiber 6 is exposed instead of that of the incident optical fiber 4 and placed apart from the tip end surface of the incident optical fiber 4.

In these arrangements, a part of light irradiated from the tip end of the incident optical fiber 4 and scattered by particles in the sample is incident on the scattered light measuring optical fiber 6.

In Figs. 6A through 6D, an angle θ of opposition is set to 90°. It should be appreciated, however, that the angle θ is not limited to 90°, and can be set arbitrarily in a range from 0° to 180°. A scale (scattering vector) used in capturing the scattering phenomenon varies with measuring angles. Hence, performing scattering measurement at various angles can provide more detailed information in regard to molecular motion. However, it is general to perform the measurement only at 90°.

In order to improve light collecting efficiency in the configurations shown in Figs. 6A through 6D, a light collecting arrangement is preferably provided to one of the optical fibers having the unexposed cladding.

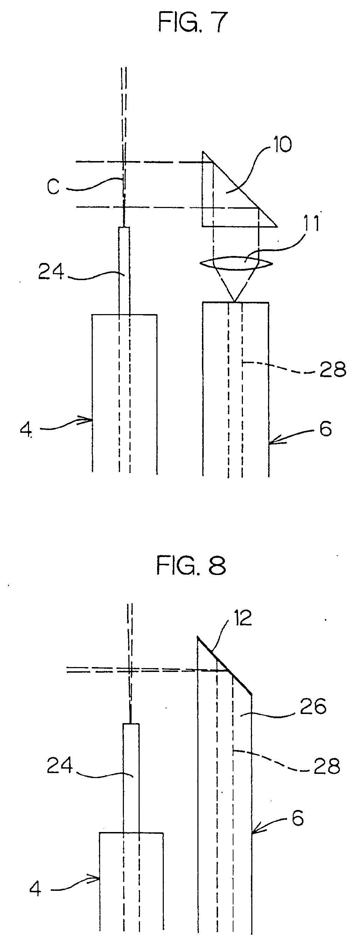

Figs. 7, 8 and 9 are views showing configurations such that the cladding of one of the optical fibers is exposed while the cladding of the other optical fiber is unexposed and provided with the light collecting arrangement instead.

Fig. 7 is a view showing an arrangement such that the cladding 24 of the incident optical fiber 4 is exposed and a prism 10 for refracting scattered light and a light collecting lens 11 are provided to the scattered light measuring optical fiber 6.

Light from the scattering volume C is refracted by the prism 10 and collected by the light collecting lens 11, and then incident on the scattered light measuring optical fiber 6. This makes it possible to collect scattered light from a relatively broad range. Hence, compared with the embodiment shown in Figs. 1, 5, and 6, this arrangement can improve efficiency of the light scattering measurement, and is effective when a low-concentrated sample is used. In addition, the same effect can be achieved by using the optical fiber 6 as a light incident element, and the optical fiber 4 as a light receiving element.

Fig. 8 is a view showing an arrangement such that collects light by using the transparent coating portion 26 of the scattered light measuring optical fiber 6 as a cylindrical lens instead of employing the prism and lens. The tip end surface 12 of the scattered light measuring optical fiber 6 is cut diagonally and covered with metal, such as aluminum, by means of vapor deposition.

The above configuration can be simpler than the configuration shown in Fig. 7 by omitting the prism and lens, and therefore, is advantageous in terms of space and cost.

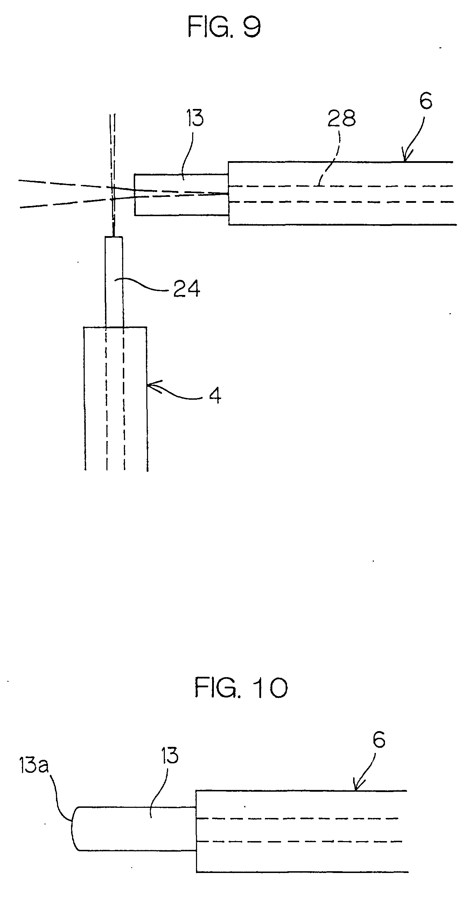

Fig. 9 is a view showing a configuration such that secures a wider angle of incidence aperture by attaching a glass rod 13 having a higher refractive index than a sample solution at the tip end surface of the scattered light measuring optical fiber 6. As shown in Fig. 10, it is preferable to apply lens polishing treatment to the tip end of the glass rod 13 as denoted by alpha-numeral 13a.

In Figs. 7, 8, and 9 discussed above, the light collecting arrangement is employed at the scattered light measuring optical fiber 6. However, the present invention is not limited to the foregoing arrangement, and for example, it may be arranged such that a light collecting member is provided to the incident optical fiber 4 while the cladding of the scattered light measuring optical fiber 6 is exposed. In addition, the present invention can be modified in various manners within the scope of the invention.

## Claims

1. An instrument for measuring light scattering that performs light scattering measurement by irradiating light to a sample and detecting light scattered from inside a scattering volume, including an incident single mode optical fiber for irradiating light to the sample, and a scattered light measuring single mode optical fiber for collecting scattered light to be propagated, said instrument being **characterized in that** an end surface of an exposed cladding of each of said single mode optical fibers is opposed to each other at a predetermined angle within a sample cell.

2. The instrument for measuring light scattering according to Claim 1, wherein a distance between the end surfaces of the claddings of said fibers is selected in a range from approximately one to several times as long as a diameter of the cladding.

3. The instrument for measuring light scattering according to Claim 1, wherein an incidence coupling portion used in guiding light emitted from an incident light source to reach said incident signal mode optical fiber is allowed to move back and forth along an optical axis direction.

4. An instrument for measuring light scattering that performs light scattering measurement by irradiating light to a sample and detecting light scattered from inside a scattering volume, including an incident single mode optical fiber for irradiating light to the sample, and a scattered light measuring single mode optical fiber for collecting scattered light to be propagated, said instrument being **characterized in that** a cladding of one of said single mode optical fibers is exposed, and an end surface of the exposed cladding of one of said single mode optical fibers is opposed to an end surface of the other optical fiber at a predetermined angle within a sample cell.

5. The instrument for measuring light scattering according to Claim 4, wherein a distance from the end surface of the exposed cladding of one of said optical fibers and the end surface of the other optical fiber is selected in a range from approximately one to several times as long as a diameter of the cladding.

6. The instrument for measuring light scattering according to Claim 4, wherein an incidence coupling portion used in guiding light emitted from an incident light source to reach said incident signal mode optical fiber is allowed to move back and forth along an optical axis direction.

7. The instrument for measuring light scattering according to Claim 4, wherein light collecting means for collecting light is provided to the other optical fiber having an unexposed cladding.

8. The instrument for measuring light scattering according to Claim 7, wherein said light collecting means is composed of a prism and a lens.

9. The instrument for measuring light scattering according to Claim 7, wherein said light collecting means has an arrangement such that the end surface of the other optical fiber is cut diagonally and a reflection film is formed thereon.

10. The instrument for measuring light scattering according to Claim 7, wherein said light collecting means has an arrangement such that a member having a higher refractive index than the sample is placed at the end surface of the other optical fiber.

11. The instrument for measuring light scattering according to Claim 10, where said member having a higher refractive index than the sample is applied with lens polishing treatment.
